# EUROPEAN PATENT APPLICATION

(11) **EP 4 579 364 A1**
(43) Date of publication of application: **02.07.2025**
(21) Application number: 24219883.6
(22) Date of filing: 13.12.2024
(51) Int. Cl.: G05B 19/418

(54) **A METHOD FOR CONTROLLING A PLANAR MOTOR SYSTEM, A COMPUTER PROGRAM PRODUCT FOR ACTUATING THE METHOD, A PLANAR MOTOR SYSTEM AND AN HANDLING APPARATUS COMPRISING THE PLANAR MOTOR SYSTEM**

(30) Priority: 27.12.2023 IT 202300028095
(71) Applicant: Tetra Laval Holdings & Finance S.A., 1009 Pully (CH)
(72) Inventor: CARULLI, Paola, 41123 Modena (IT); ROSSI, Stefano, 41123 Modena (IT); PICCININI, Giorgio, 41123 Modena (IT)
(74) Representative: Tetra Pak - Patent Attorneys SE

(57) **Abstract**

It is disclosed a method for controlling a planar motor system (1), the planar motor system (1) comprising a base element (2) and a plurality of carriers (3A,3B,3C,3D), movable independently over the base element (2);
the method comprising the following phases:
- receiving an event signal indicative an event related to the operation of the carriers (3A,3B,3C,3D) and / or of the base element (2),

and performing the following operation, as a function of the event signal:
- determining, for each carrier (3A,3B,3C,3D), a starting point (P1) and an arrival point (P2),
- generating a graph (G) defined by a plurality of potential movement points over the base element (2), including the starting point (P1) and the arrival point (P2),
- calculating a movement path (P) from the starting point (P1) to the arrival point (P2), which connects a portion of the potential movement points of the graph (G) .

## Description

### TECHNICAL FIELD

The present invention relates to a planar motor system and to a method for operating such planar motor system, which planar motor system could be advantageously employed as a part of a product handling apparatus for a packaging line.

### BACKGROUND ART

As it is commonly understood, numerous liquid or pourable food products are distributed in containers that are manufactured within a packaging production line, notably through the utilization of a packaging apparatus. Conventionally, after their production, these containers are subsequently transported to specific operational stations, such as those designed for sealing or for conducting additional procedures on the same container.

Planar motor systems have been established for the conveyance of diverse product types. Conventionally, a planar motor system comprises a base element and an array of carriers that move over the base element. These carriers possess the capability to traverse along two principal axes, specifically the x-axis and the y-axis, and their relative elevation concerning the base element can be modulated along the z-axis.

Furthermore, these carriers are equipped with the capacity for full rotation about an axis orthogonal to the base element, i.e., the z-axis, and can be rotated along two additional axes parallel to both the x-axis and the y-axis, albeit within a constrained angular range.

Such planar motor systems are controlled by a control unit, which operates on the base element to move or rotate, individually, each of the carrier in order to execute the assigned task.

Such planar motor systems could be advantageously employed downstream to a packaging machine, for carrying out operation on the produced container.

In the context of normal operation, various events can occur that may affect the functioning of the planar motor system.

For example, it can occur that the control unit of the planar motor system is susceptible to errors, which may also arise from circumstances occurring on individual carriers, such as the application of excessive force that the magnet cannot compensate for or other factors.

In such situations, since the upstream packaging machine operates at a constant speed, it is imperative to promptly restore the operability of the planar motor system to prevent production stoppages or the rejection of containers.

### DISCLOSURE OF THE INVENTION

Hence, a need exists for a planar motor system that can operate optimally regardless of circumstances and can rapidly restore its functionality, for instance in cases of malfunctions or changes in the operational configuration.

Furthermore, there is a particularly strong need to have at one's disposal a planar motor system in which collisions between different carriers are substantially avoided.

There is a highly recognized need in the relevant sector to have access to a planar motor system that can operate efficiently and safely under all circumstances and can adapt very quickly to events or changes that may occur during operation.

One objective of the present invention is therefore to make available a planar motor system and a control method that can, advantageously, rapidly and flexibly adapt to events or changes that occur in its operation, minimizing the risk of collisions between carriers.

### BRIEF DESCRIPTION OF THE DRAWINGS

The advantages of the invention will be more conspicuously evident in the ensuing detailed description, accompanied by reference to the appended drawings, which represent a purely exemplary and non-limiting embodiment, wherein:
Figure 1 provides a schematic top view of the planar motor system according to the invention, which is used in a product handling apparatus.

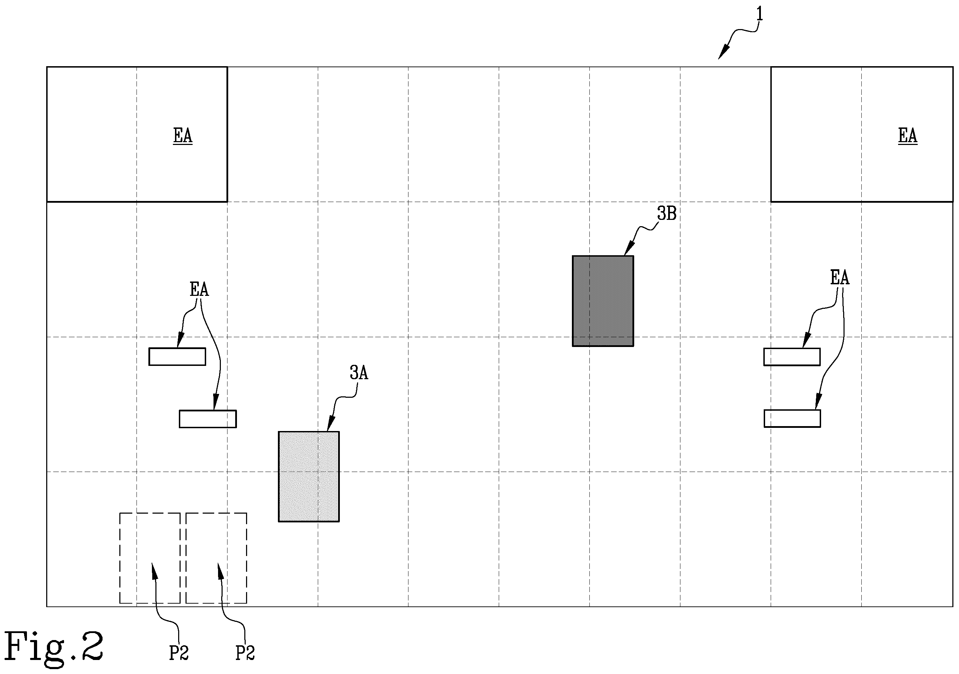

Figure 2 offers a schematic top view of the planar motor system according to the invention, also employed in a product handling apparatus.
Figures 3 to 5 schematically represent a graph traced over a base element of the planar motor system according to the invention.

### BEST MODES FOR CARRYING OUT THE INVENTION

The invention concerns a method for controlling a planar motor system 1 comprising a base element 2 and a plurality of carriers 3A,3B,3C,3D, movable independently over the base element 2.

The method comprises receiving an event signal indicative of an event related to the operation of the carriers 3A,3B,3C,3D and/or of the base element 2, and performs the following steps, as a function of the event signal:
- determining, for each carrier 3A,3B,3C,3D, a starting point P1 and an arrival point P2 as a function of the event signal,
- generating a graph G defined by a plurality of potential movement points over the base element 2, including the starting point P1 and the arrival point P2,
- calculating, for each carrier, a movement path P from the starting point P1 to the arrival point P2 comprising a portion of the potential movement points of the graph G,
- driving the plurality of carriers 3A,3B,3C,3D according to the calculated movement paths P.

In the following, further aspects of the invention will be disclosed, which could be each other combined.

According to one aspect, the method comprises driving the plurality of carriers 3A,3B,3C,3D according to respective predetermined movement profiles and, if an event signal is received, updating the predetermined movement profiles based on the calculated movement paths P, wherein the predetermined movement profiles are calculated based on an initial graph G defined by a plurality of potential movement points over the base element 2, including predetermined starting points and predetermined arrival points for each carrier 3A,3B,3C,3D.

In accordance with this aspect, the method involves moving carriers 3A, 3B, 3C, 3D based on an initial graph and updating movement profiles following the reception of an event. Advantageously, this implements a dynamic update of the carriers' movement based on the received event signal, indicative of the event. It is noted that, according to the fundamental concept of the invention, the initial and final positions are determined based on the event signal or the specific event to which it pertains.

According to another aspect, the method comprises identifying a number of transit points TP indicative of a presence of respective handling stations, and calculating, for each carrier, the movement path P from the starting point P1 to the arrival point P2 also as a function of at least a transit point TP.

Note that, in accordance with this aspect, carriers 3A, 3B, 3C, 3D transit through at least one of the identified transit points TP.

According to another aspect, the event signal is indicative of a variation in the number of carriers 3A,3B,3C,3D or handling stations operating over the base element 2.

Thus, following the above event signal, indicative of a variation in the number of carriers 3A,3B,3C,3D or handling stations operating over the base element 2, the method further comprising the following phases:
- adjusting a number of transit points TP and/or exclusion areas EA based on the event signal indicative of a variation in the number of operative carriers 3A,3B,3C,3D or handling stations, and
- adjusting the movement path P of the carriers 3A,3B,3C,3D based on the adjusting of the number of transit points TP and/or the exclusion areas EA.

This advantageously allows adapting the movement path of carriers 3A, 3B, 3C, 3D extremely quickly and efficiently based on received changes to the number of transit points TP or exclusion areas EA.

According to a further aspect, the method comprises:
- identifying a number of excluded areas EA on the base element 2 indicative of obstacles for at least one carrier in the plurality of carriers 3A,3B,3C,3D,
- calculating the graph G excluding, from the plurality of potential movement points, points belonging to the excluded areas EA of the base element 2.

According to a further aspect, the excluded area EA comprises at least one of:
- for each carrier 3A, 3B, 3C, 3D, the regions over the base element 2 where the other carriers 3A,3B,3C,3D are located,
- obstacles present at the base element 2 hindering the movement of the carrier 3A, 3B, 3C, 3D or the object carried by the carrier 3A, 3B, 3C, 3D,
- an area proximate to the borders of the base element 2;
- a safety area surrounding each carrier 3A, 3B, 3C, 3D, the safety area being calculated based on the dimensions of the single carrier.

The previously defined examples of exclusion areas (EA) are non-limiting examples; it is understood that the exclusion area could also be defined by other elements.

According to a still further aspect, the method comprises generating the graph G and calculating the movement path P according to a Dijkstra algorithm.

According to another aspect, the event signal is indicative of an error condition, and wherein the phase of determining, for each carrier 3A,3B,3C,3D, a starting point P1 and an arrival point P2 comprises a phase of identifying the starting point P1 as an instant position of each carrier 3A,3B,3C,3D and the arrival point P2 as a predetermined home position for each carrier 3A,3B,3C,3D.

This scenario will be further described below.

According to a different aspect of the method:
- the calculated movement path P from the starting point P1 to the arrival point P2 corresponds to the movement path, among the plurality of feasible moving points, which optimizes the sum of predetermined weight values associated to each connection between adjacent feasible moving points in the graph G;
- the predetermined weight values represent the distances between adjacent feasible moving points in the graph G;
- the calculated path P from the starting point P1 to the arrival point P2 corresponding to the path which minimizes the overall distance from the starting point P1 and the arrival point P2.

According to an aspect of the method, the calculated path P from the starting point P1 to the arrival point P2 corresponds to the path, among the plurality of feasible moving points, which optimizes the sum of predetermined weight values associated to each connection between adjacent feasible moving points in the graph G and wherein the predetermined preferential weight values for some points of the potential movement points over the base element 2 are different for each carrier 3A,3B,3C,3D, the predetermined preferential weight values defining preferential different path for each carrier 3A,3B,3C,3D.

According to a further aspect, the method comprises interpolating at least partly the portion of the potential movement points of the movement path, thereby reducing the number of movement points of the movement path.

Further, the interpolated points comprise points whereby the carrier has a constant speed and/or a rectilinear path and/or whereby the carrier 3A,3B,3C,3D carries an object.

According to another aspect, the method comprises interpolating at least partly said portion of the potential movement points by means of a spline function.

According to the invention, it is further disclosed a computer program product, loadable in a memory of at least one control unit, and comprising software code portions suitable for performing the phases of the method for controlling a planar motor system as disclosed.

The invention concerns a planar motor system 1, comprising:
- a base element 2;
- a plurality of carriers 3A,3B,3C,3D, movable independently over the base element 2;
- a control unit 4 configured to perform the steps of the method herein described.

Preferably, the control unit 4 is configured for controlling the movement of the carriers 3A,3B,3C,3D over the base element 2.

In the subsequent discussion, a comprehensive disclosure of the planar motor system (referred to as "system 1") will be presented in intricate detail. It is to be understood that the particulars and aspects elucidated concerning the planar motor system 1 are equally applicable to the disclosed method.

The computer program product previously introduced may be loaded in and executed by the control unit 4. According to the invention, the control unit 4 is configured for detecting, or receiving, one or more signals indicative of an event related to the functioning of the carriers 3A,3B,3C,3D and/or of the base element 2.

In the current description, the term "event" encompasses various occurrences, including but not limited to, signal reception and/or changes in the configuration of control unit 4, changing on the number of carriers or in the number or location of the processing station, among others. The events may be related to operation of the base element, the carriers and/or the packaging line.

According to another aspect, the control unit 4 is configured to move (i.e. drive) each carrier 3A, 3B, 3C, 3D over the base element 2, preferably along two orthogonal directions (lying on the base element 2) and in height relative to the base element 2.

Furthermore, according to another aspect, the control unit 4 is configured to rotate each carrier 3A, 3B, 3C, 3D at least partially over the base element 2, preferably around three orthogonal independent axes (one of which being orthogonal to a surface of the base element 2).

Preferably, the base element is magnetizable. According to this aspect, the base element 2 comprises a plurality of coils (not shown) which can be selectively activated in a known manner to generate an electromagnetic field able to move the carriers 3A, 3B, 3C, 3D over the base element 2.

According to the description, the control unit 4 is configured (e.g. by means of the computer program executed therein) for:
- determining, for each carrier 3A,3B,3C,3D, as a function of the detected event, a starting point P1 and an arrival point P2;
- generating a graph G defined by a plurality of potential movement points over the base element 2, including the starting point P1 and the arrival point P2, as a function of the detected event;

- calculating a movement path P from the starting point P1 to the arrival point P2, which connects a portion of the potential movement points of the graph G, as a function of the detected event;
- driving the plurality of carriers 3A,3B,3C,3D according to the calculated movement paths P.

Please take into consideration that the calculations or determination or generation mentioned above are performed by the control unit 4, relying on the detected event.

For instance, the starting point P1 and the arrival point P2 may vary depending on the specific type of event, as will be elaborated upon in more detail later.

In other words, different event signals may be related to different starting points P1 and arrival points P2.

Further, the movement path P from the starting point P1 to the arrival point P2 is calculated based on the detected event, as will be further disclosed later.

According to another aspect, the control unit 4 is configured for calculating the path P from the starting point P1 to the arrival point P2, which include at least a transit point TP.

The transit point TP is a point wherein the carrier 3A,3B,3C,3D should at least pass. The carrier may stop at least temporarily at the transit point TP.

The transit point TP is one of the potential movement points of the graph G.

The transit points TP may be indicative of a presence of respective handling stations, e.g. designated areas in the system wherein loading, unloading, processing, or manipulation of containers or products take place.

For example, the transit points TP could be, for example, one or more processing stations 9 such as a printing station or a capping station, a feeding conveyor 7, a discharge conveyor 8, etc.

In other words, advantageously, due to the presence of transit points TP, it is possible to generate a movement path P that enables the carriers 3A,3B,3C,3D to pass precisely through desired points (i.e. transit point TP) where certain operations are performed, such as product reception or product processing, and so on.

According to another aspect, the control unit 4 is configured (thanks to the computer program loaded and executed) for calculating the graph G excluding, from the plurality of potential movement points, points belonging to at least an excluded area EA over the base element 2.

Advantageously, this allows for the exclusion of points from the movement path P where, for example, obstacles are present (which can be any objects or elements on the base element 2 that may hinder the free movement of carriers 3A, 3B, 3C, 3D).

According to one aspect, the excluded area comprises, for each carrier 3A,3B,3C,3D, the regions over the base element 2 wherein the other carriers 3A,3B,3C,3D are located.

In other words, the region of the base element 2 occupied by a specific carrier 3A, 3B, 3C, 3D defines an excluded area for the other carriers 3A, 3B, 3C, 3D, thereby preventing collisions among carriers 3A, 3B, 3C, 3D when defining their paths following an event.

Subsequently, a more in-depth description of the calculation of the graph G and the movement path P will be provided.

According to an aspect, the control unit 4 is configured to calculate the graph G and the movement path P according to a Dijkstra algorithm.

The description of the planar motor system's operation following an event that signifies an error condition and/or a restart will be provided in the following passages. In such a specific scenario, the starting point P1 corresponds to the current position of each carrier 3A, 3B, 3C, 3D, while the arrival point P2 is a predefined home position for each carrier 3A, 3B, 3C, 3D.

It is important to note that in this case, the arrival point P2 (i.e. the home position) is distinct for each carrier 3A, 3B, 3C, 3D.

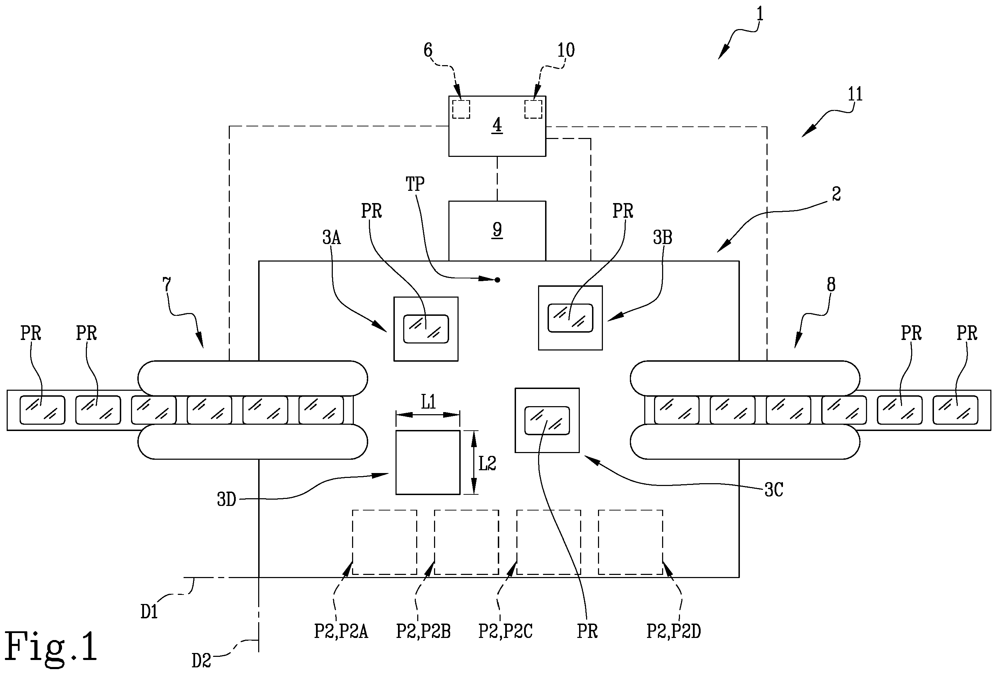

In figure 1, the references P2A, P2B, P2C, P2D have been indicated as the arrival positions of carriers 3A, 3B, 3C, and 3D, respectively.

In such scenario, the starting point P1 is different for each carrier 3A, 3B, 3C, 3D and corresponds to the instant position of the carrier (preferably at the time the event is detected or triggered).

Preferably, the control unit 4 is configured to sequentially move one carrier 3A, 3B, 3C, 3D at a time along the calculated path P.

Advantageously, in this manner, the calculation of the movement path P is simplified because the excluded zones EA for the movement of a carrier 3A, 3B, 3C, 3D, corresponding to the instantaneous positions of the other carriers 3A, 3B, 3C, 3D, are not dynamic (i.e., subject to change over time due to the simultaneous motion of multiple carriers 3A, 3B, 3C, 3D) but rather static.
Therefore, the control unit 4 (by means of the computer program executed therein) calculates the movement path P for a carrier 3A, 3B, 3C, 3D while considering the other carriers 3A, 3B, 3C, 3D as stationary or maintaining their position over the base element 2.

According to another aspect, the event represents a change in the number of the carriers 3A,3B,3C,3D, operating over the base element 2.

It is worth noting that, in accordance with this aspect, it is possible to decrease or increase the number of carriers 3A, 3B, 3C, 3D operating over the base element 2. Consequently, with a decreased or increased number of carriers, it is necessary or advisable to perform a graph and a movement path calculation for the corresponding number of carriers 3A, 3B, 3C, 3D operating over the base element 2, for optimizing the trajectories of individual carriers 3A, 3B, 3C, 3D as a consequence of the variation in the number of the carriers 3A,3B,3C,3D, operating over the base element 2.

In another aspect, the event corresponds to the movement or change in the number of a transit point TP (preferably corresponding to a processing station) above the base element 2. In this case, the control unit 4 performs a graph and movement path calculation for the corresponding number of carriers 3A, 3B, 3C, 3D operating over the base element 2 to optimize the trajectories of individual carriers 3A, 3B, 3C, 3D as a result of the variation in the number and/or position of the transit point TP.

In the following, a more detailed description of the algorithm for calculating the graph G and the movement path P is provided.

The control unit 4 is configured (by means of the computer program executed therein) to generate a graph G defined by a plurality of potential movement points over the base element 2, including the starting point P1 and the arrival point P2.

Thus, the control unit 4 (by means of the computer program executed therein) generates, according to predetermined rules, the potential movement points defining the graph G.

In the graph G, each point is connected only to adjacent points along predetermined directions. Such connection is also called "edge", whilst each point of the graph G is also called a "node".

The graph G is generated as follows.

It should be noted that, according to another aspect, the control unit 4 (by means of the computer program executed therein which operates the disclosed controlling method) is configured to determine a plurality of potential movement points defining the graph G, both horizontally and vertically relative to the edges of the base element 2.

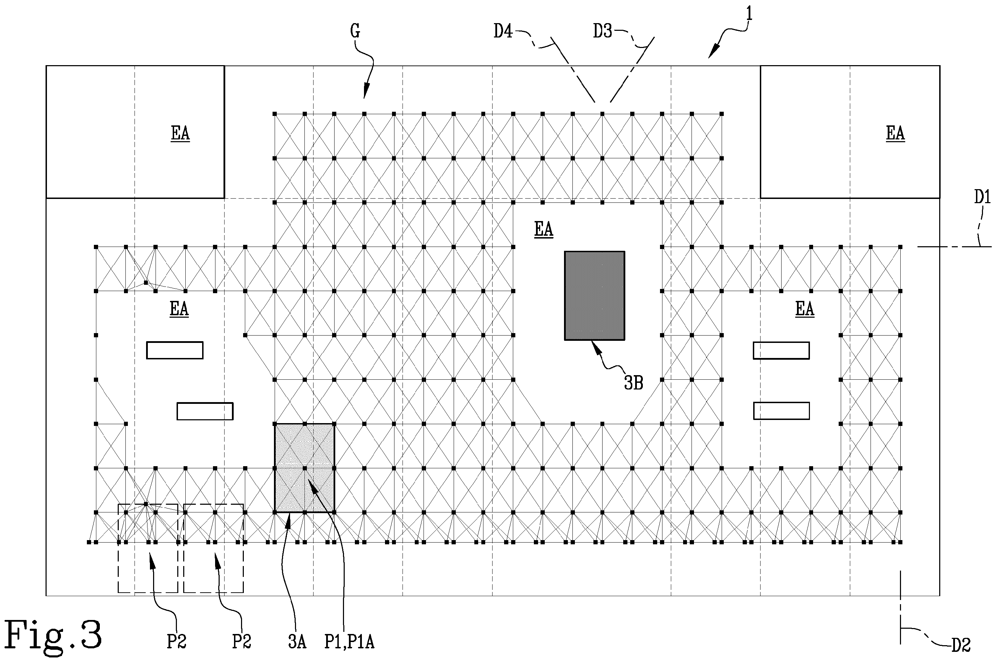

Usually, the starting point P1 is the center of a carrier 3A,3B,3C,3D (in Figure 3, the starting point of carrier 3A has been labeled as P1A).

From the starting point P1, a grid of potential movement points is constructed along two orthogonal directions, D1 and D2, each of which is parallel to a different side of the orthogonal sides of the base element 2. The direction D1 will hereafter be referred to as the horizontal direction, while the direction D2 will be referred to as the vertical direction.

Preferably, these potential movement points are located horizontally at least half the horizontal length of the carrier 3A, 3B, 3C, 3D. Additionally, they are positioned vertically at least half the vertical length of the carrier 3A, 3B, 3C, 3D.

These potential movement points are spaced from each other at a predetermined interval, which may differ in the D1 direction compared to the D2 direction. Preferably, the interval or distance between the potential movement points in the D1 direction is equal to or greater than the length L1 of the carrier in that direction. Likewise, preferably, the interval or distance between the potential movement points in the D2 direction is equal to or greater than the length L2 of the carrier in that direction.

Furthermore, within the grid of potential movement points, if we consider four points that define the vertices of a square, these points are paired and connected through diagonals. In other words, each point on the grid is connected to others along directions D3 and D4, which are angularly arranged with respect to directions D1 and D2.

In accordance with another aspect, the control unit 4 (by means of the computer program executed therein which actuates the disclosed controlling method) is configured to calculate weight values associated with each connection (i.e. edge) between adjacent feasible movement points in the graph G.

Alternatively, or in combination with the previous aspect, the control unit 4 has a memory 10 containing predetermined weight values for at least a portion of the adjacent feasible movement points in the graph G.

With reference to a transit point TP, which is a potential movement point where the movement path needs to pass through, preferably, the control unit 4 (by means of the computer program executed therein which actuates the disclosed controlling method) is configured to set a predetermined weight (e.g. a low weight, in the case of a path calculation function that minimize the sum of weights). Additionally, the control unit 4 is configured (by means of the computer program executed therein which actuates the disclosed controlling method) to set predetermined weights for points within the transit point TP. This way, advantageously, the control unit 4 calculates the movement path to ensure it passes through the desired transit point TP.

According to other aspects, the predetermined weight values represent the distances, meaning they are positively correlated with the distance between adjacent feasible moving points in the graph G. In this aspect, the calculated path P from the starting point P1 to the arrival point P2 corresponds to the path that minimizes the overall distance between the starting point P1 and the arrival point P2. In other words, this path optimizes (minimizes) the conveying time of the carrier 3A, 3B, 3C, 3D.

According to another aspect, the control unit 4 has predetermined preferential weight values for some points of the potential movement points over the base element 2, different for each carrier 3A,3B,3C,3D, the predetermined preferential weight values defining preferential path for each carrier 3A,3B,3C,3D.

In this manner, it is possible to advantageously establish preferred paths for each carrier 3A, 3B, 3C, 3D, with these preferred paths being distinct from one another.

It should be noted that having a preferential path is advantageous in cases where, for example, there is a processing station located on the base element 2, which is a point where carriers 3A, 3B, 3C, 3D needs to pause for a predetermined period.

In such a scenario, the fact that each carrier 3A, 3B, 3C, 3D has a preferred lane prevents collisions between the carriers 3A, 3B, 3C, 3D in the approach/retreat path from the common stop point, namely, the processing station.

According to one aspect, the control unit 4 can be configured (by means of the computer program executed therein which operates the disclosed controlling method) to assign weight values to diagonal edges that differ from the weight values assigned to vertical or horizontal edges.

In this way, control unit 4 will tend to favor movements which minimize the distance between two adjacent points.

In more general terms, the control unit 4 (by means of the computer program executed therein which operates the disclosed controlling method) is configured to assign different weights values to trajectories with different inclinations.

According to another aspect, the control unit 4 could be configured (by means of the computer program executed therein which operates the disclosed controlling method) to calculate the speed of a carrier 3A,3B,3C,3D along each edge (connection) of the movement path P based on the weight value of the same edge. In other words, according to this aspect, the control unit 4 is configured to assign a movement speed to each carrier 3A, 3B, 3C, 3D on a single edge based on the weight value.

In other words, the carrier's speed could be adjusted to different values depending on the values of the edge of the connection.

Advantageously, this allows for setting the speed to an optimal value depending on the actual layout of each region of the movement path P, whether it is vertical, horizontal, or diagonal.

According to another aspect, the control unit 4 could be configured (by means of the computer program executed therein which operates the disclosed controlling method) to calculate the speed of a carrier 3A,3B,3C,3D proportionally to the number of carriers 3A, 3B, 3C, 3D: a reduction in the number of carriers on the base element 2 may correspond to an increase in the speeds of the carriers 3A,3B,3C,3D.

Now, figures 3, 4, and 5 will be described in greater detail.

Referring to Figure 3, this figure pertains to a scenario where there are two carriers, indicated as 3A and 3B, positioned above the base element 2. Figure 3 represents the calculated graph G for the first carrier, 3A. The area around the second carrier, 3B, constitutes an excluded area EA. Advantageously, the excluded area EA indicative of presence of the carrier may be adapted based on the properties of the single carrier, e.g. presence of a gripper on the carrier or different dimensions thereof.

With reference to the starting point P1 of the first carrier 3A, it is denoted as P1A. The first carrier 3A needs to be moved to position P2, which is commonly referred to as the home position.

The control unit 4 (by means of the computer program executed therein which actuates the disclosed controlling method) is configured to calculate and generate points comprising graph G while maintaining a predetermined distance from the edges of the base element. In other words, there is an exclusion zone along the edges of the base element where points of graph G are not constructed, with a predetermined width.

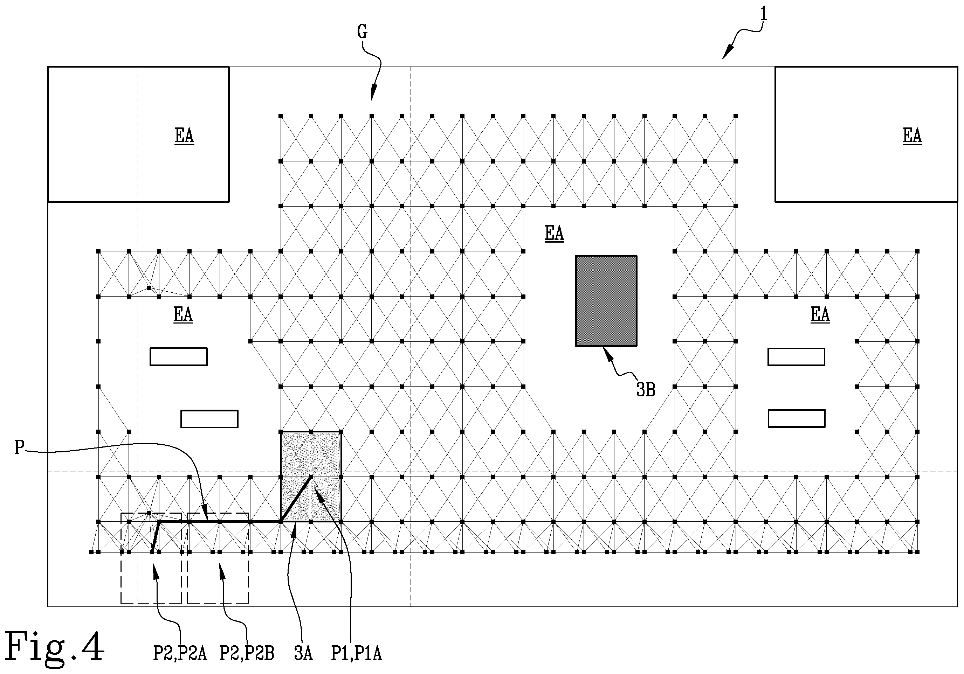

Figure 4 represents the movement path P calculated by the control unit 4 between the starting position P1 and the arrival position P2. It is worth noting that this movement path P is the shortest distance path between the starting position P1 and the arrival position P2.

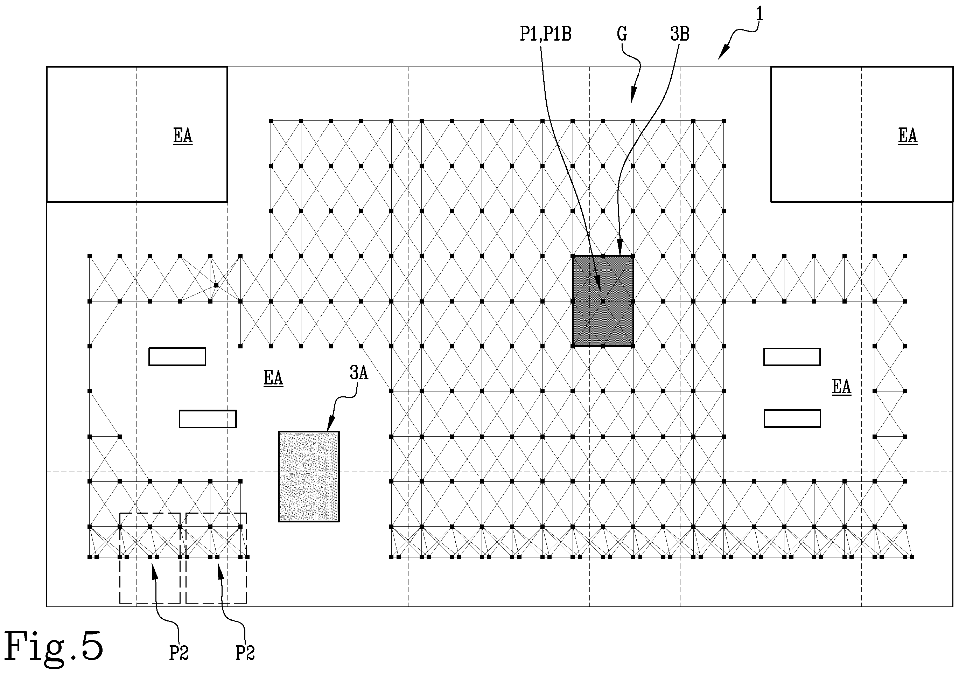

On the other hand, Figure 5 represents the graph G related to carrier 3B.

According to another aspect, said movement path P is calculated by the control unit 4 according to a mathematical function interpolating said portion of the potential movement points of the graph G.

In this manner, advantageously, it is possible to reconstruct a continuous-type movement path from a series of discrete points, as these points are connected by an interpolating mathematical function. At least a portion of the movement path P can be interpolated for one or more or all carriers 3A,3B,3C,3D.

For example, the interpolated portion may comprise the portion whereby the carrier 3A,3B,3C,3D carries an object.

Consequently, there is no deceleration/acceleration of each carrier 3A, 3B, 3C, 3D between one point and the next, as would occur in the case of a number of discrete points comprising the movement path P. Under this scenario, the speed of each carrier 3A,3B,3C,3D remains more constant.

Preferably, the mathematical function is a spline function interpolating said portion of the potential movement points of the graph G.

A spline is a mathematical curve that is defined by a set of control points (i.e. the portion of the potential movement points of the graph G defining the movement path P from the starting point P1 to the arrival point P2).

According to another aspect, the control unit 4 comprises an interface unit 6, configured for receiving an event signal.

According to this aspect, the control unit 4 is configured for detecting, or receiving information concerning, an event relative to the functioning of the carriers 3A, 3B, 3C, 3D and / or of the base element 2 based on such event signal.

The term "detecting an event" refers to the fact that the control unit 4, through issued commands, sensors, or signals, is instructed that a change in operating conditions has occurred.

The interface unit can comprise a wi-fi module or an electric connector having inputs or outputs or commands (buttons, touch screen, a receiver for vocal commands, etc.).

The control unit 4 could be the control unit of a packaging line, such as a PLC or defined by any computerized means (even remote) which can carry out the method according to the invention.

According to another aspect, the event signal could be the signal from the packaging line's control unit.

Advantageously, the planar motor system 1 and the method according to the invention allows for a reduction in collisions between carriers 3A, 3B, 3C, 3D and optimizes their trajectories.

Indeed, it should be noted that calculating the trajectory, specifically the movement path P, using a graph G allows for the reduction of any collision risks. This is achieved through precise calculations of the paths taken by the different carriers 3A, 3B, 3C, 3D, with the aim of avoiding collisions between them.

According to the present description, it is further disclosed an apparatus 11 for handling products PR (in particular containers such as packages), comprising:
- a planar motor system 1 as previously described,
- at least a container handling station 9, preferably a capping station, positioned at the base element 2, wherein at least one carrier is configured to transit through the container handling station 9.

The apparatus 11 further comprises:
- a feeding conveyor 7, configured for conveying products PR in a predetermined entrance area of the base element 2;
- a discharge conveyor 8 configured for receiving products PR in a predetermined exit area of the base element 2 and conveying products PR outside the base element 2.

The apparatus 11 for handling products PR is part of a packaging line, which is not illustrated.

## Claims

1. A method for controlling a planar motor system (1) comprising a base element (2) and a plurality of carriers (3A,3B,3C,3D), movable independently over the base element (2); the method comprising receiving an event signal indicative of an event related to the operation of the carriers (3A,3B,3C,3D) and/or of the base element (2), and performing the following steps, as a function of the event signal:
- determining, for each carrier (3A,3B,3C,3D), a starting point (P1) and an arrival point (P2) as a function of the event signal,
- generating a graph (G) defined by a plurality of potential movement points over the base element (2), including the starting point (P1) and the arrival point (P2),
- calculating, for each carrier, a movement path (P) from the starting point (P1) to the arrival point (P2) comprising a portion of the potential movement points of the graph (G), and
- driving the plurality of carriers (3A,3B,3C,3D) according to the calculated movement paths (P).

2. The method according to claim 1, comprising driving the plurality of carriers (3A,3B,3C,3D) according to respective predetermined movement profiles and, if an event signal is received, updating the predetermined movement profiles based on the calculated movement paths (P), wherein the predetermined movement profiles are calculated based on an initial graph (G) defined by a plurality of potential movement points over the base element (2), including predetermined starting points and predetermined arrival points for each carrier (3A,3B,3C,3D) .

3. The method according to any of the previous claims, comprising identifying a number of transit points (TP) indicative of a presence of respective handling stations, and calculating, for each carrier, the movement path (P) from the starting point (P1) to the arrival point (P2) also as a function of at least a transit point (TP).

4. The method according to any of the previous claims, wherein the event signal is indicative of a variation in the number of carriers (3A,3B,3C,3D) operating over the base element (2) or a variation in the number of handling stations.

5. The method according to any of the previous claims, comprising:
- identifying a number of excluded areas (EA) on the base element (2) indicative of obstacles for at least one carrier in the plurality of carriers (3A,3B,3C,3D),
- calculating the graph (G) excluding, from the plurality of potential movement points, points belonging to the excluded areas (EA) of the base element (2).

6. The method according to the previous claim, wherein the excluded area (EA) comprises at least one of:
- for each carrier (3A,3B,3C,3D), the regions over the base element (2) wherein the other carriers (3A,3B,3C,3D) are located,
- obstacles present at the base element (2) hindering the movement of the carrier (3A, 3B, 3C, 3D) or the object carried by the carrier (3A, 3B, 3C, 3D),
- an area proximate to the borders of the base element (2);
- a safety area surrounding each carrier (3A, 3B, 3C, 3D), the safety area being calculated based on the dimensions of the single carrier.

7. The method according to any previous claims, comprising generating the graph (G) and calculating the movement path (P) according to a Dijkstra algorithm.

8. The method according to any previous claims, wherein the event signal is indicative of an error condition, and wherein the phase of determining, for each carrier (3A,3B,3C,3D), a starting point (P1) and an arrival point (P2) comprises identifying the starting point (P1) as an instant position of each carrier (3A, 3B, 3C, 3D) and the arrival point (P2) as a home position for each carrier (3A,3B,3C,3D).

9. The method according to any of the previous claims, wherein:
- the calculated movement path (P) from the starting point (P1) to the arrival point (P2) corresponds to the movement path, among the plurality of feasible moving points, which optimizes the sum of predetermined weight values associated to each connection between adjacent feasible moving points in the graph (G);
- the predetermined weight values represent the distances between adjacent feasible moving points in the graph (G); and/or
- the calculated path (P) from the starting point (P1) to the arrival point (P2) corresponding to the path which minimizes the overall distance from the starting point (P1) and the arrival point (P2).

10. The method according to any of the previous claims, wherein the calculated path (P) from the starting point (P1) to the arrival point (P2) corresponds to the path, among the plurality of feasible moving points, which optimizes the sum of predetermined weight values associated to each connection between adjacent feasible moving points in the graph (G) and wherein the predetermined preferential weight values for some points of the potential movement points over the base element (2) are different for each carrier (3A,3B,3C,3D), the predetermined preferential weight values defining preferential different path for each carrier (3A,3B,3C,3D).

11. The method according to any of the previous claims, comprising interpolating at least partly the portion of the potential movement points of the movement path, thereby reducing the number of movement points of the movement path.

12. The method according to the previous claim, wherein the interpolated points comprise points whereby the carrier has a constant speed and/or a rectilinear path and/or whereby the carrier (3A,3B,3C,3D) carries an object.

13. The method according to any of the previous claims 11 or 12, comprising interpolating at least partly said portion of the potential movement points by means of a spline function.

14. A computer program product, loadable in a memory of at least one control unit, and comprising software code portions suitable for performing the phases of the method for controlling a planar motor system (1) according to any of the previous claims.

15. A planar motor system (1), comprising:
- a base element (2);
- a plurality of carriers (3A,3B,3C,3D), movable independently over the base element (2);
- a control unit (4) having stored thereon the computer program of the previous claim.

16. Apparatus (11) for handling containers, comprising:
- a planar motor system (1) according to the previous claim,
- at least a container handling station (9), preferably a capping station, positioned at the base element (2), wherein at least one carrier (3A,3B,3C,3D) is configured to transit through the container handling station (9).
